# EUROPEAN PATENT SPECIFICATION

(11) **EP 1 423 270 B1**
(45) Date of publication and mention of the grant of the patent: **21.05.2008**
(21) Application number: 02753464.3
(22) Date of filing: 14.08.2002
(51) Int. Cl.: B32B 7/04, B32B 27/08

(54) **GLAZING PRELAMINATES, GLAZING LAMINATES, AND METHODS OF MAKING SAME**
VORVERBUND- UND VERBUNDGLAS, UND VERFAHREN ZU DESSEN HERSTELLUNG
PRESTRATIFIES DE VITRAGE, STRATIFIES DE VITRAGE ET PROCEDES DE FABRICATION ASSOCIES

(30) Priority: 17.08.2001 US 313186 P
(43) Date of publication of application: 02.06.2004
(73) Proprietor: 3M Innovative Properties Company, St. Paul, MN 55133-3427 (US)
(72) Inventor: DIETZ, Peter, T., Eagan, MN 55122 (US); FALAAS, Dennis, O., Stillwater, MN 55082 (US); KRANZ, Heather, K., Blaine, MN 55449 (US); KOSTER, Brian, L., Mendota Heights, MN 55188-1924 (US)
(74) Representative: Meyers, Hans-Wilhelm
(86) International application number: PCT/US2002/025837
(87) International publication number: WO 2003/016047

(56) References cited:
- EP-A- 0 319 911
- US-B1- 6 180 246
- PATENT ABSTRACTS OF JAPAN vol. 1996, no. 07, 31 July 1996 (1996-07-31) & JP 08 066986 A (SEKISUI CHEM CO LTD), 12 March 1996 (1996-03-12)

## Description

### Field of the Invention

The present invention relates to glazing prelaminates and glazing laminates. More particularly, the invention relates to glazing laminates and glazing prelaminates that are prepared using an organic titanate primer.

### Background of the Invention

Conventional automotive and architectural glazing laminates typically include an energy absorbing or shock dissipating layer of plasticized poly(vinyl butyral) (PVB) between two transparent sheets of glass or plastic. The glazing laminates are prepared by placing the PVB layer between the glass, eliminating air from the engaging surfaces, and then subjecting the assembly to an elevated temperature and pressure in an autoclave to fusion bond the PVB and the sheets of glass or plastic. Such glazing laminates have also included a functional film engineered to enhance the performance of a window containing the glazing laminate. For example, functional films have been used to improve the safety of the glazing laminate or to reduce entry of infrared radiation through the glazing laminate into a vehicle or building.

Glazing prelaminates are prepared by adhering a functional film to one or more layers of PVB. The glazing prelaminates are bonded to one or more transparent sheets of glass or plastic to form vehicular or architectural glazing laminates.

Conventional manufacturing processes used to prepare glazing prelaminates typically involve heating the PVB in the range of about 120 °F (49 °C) to about 150 °F (66 °C). At these temperatures, the PVB softens, becomes tacky, and adheres to the functional film. The adhesive strength is typically sufficient to keep the PVB and the functional film together during the subsequent steps involved in forming a glazing laminate from the glazing prelaminate. The processes have been limited to line speeds of about 15 ft/min (8 cm/sec).

US-A-6180246 discloses a method of making a glazing laminate comprising (i) applying an adhesion promoter comprising an organofunctional silane to a first surface of a PVC layer to form a first treated surface of the PVC layer, and (ii) contacting so as to adhere together said first treated surface and a glass pane.

EP-A-319911 discloses a method of making a glazing laminate comprising (i) applying an adhesive layer comprising an amino group-containing organosilicon compound to a first surface of a polyester layer to form a first treated surface of the polyester layer, and (ii) contacting so as to adhere together said first treated surface and a polyvinylbutyral layer.

JP-A-8066986 discloses a method of making a metal/plastic laminate comprising (i) applying a sintered organic titanate primer to a first surface of a heated steel plate, and (ii) contacting so as to adhere together said first treated surface of the steel plate and a polyolfin layer.

### Summary of the Invention

The present invention provides glazing prelaminates and glazing laminates for vehicular and architectural applications. Other aspects of the invention provide efficient methods for making glazing prelaminates and glazing laminates. In particular, both glazing prelaminates and glazing laminates are prepared using an organic titanate primer.

In one aspect, the invention provides a method of making a glazing prelaminate. The method involves providing an organic titanate primer between a functional film and a shock dissipating layer, and adhering the functional film to the shock dissipating layer.

In a second aspect, the invention provides a glazing prelaminate. The glazing prelaminate includes a functional film adhered to a shock dissipating layer with an adhesive region between the functional film and the shock dissipating layer. The adhesive region contains a reacted organic titanate primer.

In a third aspect, the invention provides a method of making a glazing laminate. The method involves providing an organic titanate primer between a functional film and a shock dissipating layer, adhering the functional film to the shock dissipating layer, and bonding a transparent substrate to the shock dissipating layer such that the shock dissipating layer is between the functional film and the transparent substrate.

In a fourth aspect, the invention provides a glazing laminate. The glazing laminate includes a functional film adhered to a shock dissipating layer with an adhesive region between the functional film and the shock dissipating layer. The adhesive region contains a reacted organic titanate primer. A transparent substrate is bonded to the shock dissipating layer such that the shock dissipating layer is between the functional film and the transparent substrate.

The glazing prelaminates can typically be prepared at lower temperatures than used with conventional processes that do not include an organic titanate primer. For example, the glazing laminates can be prepared at temperatures less than about 120°F (49 °C). In some embodiments, the glazing prelaminate can be prepared using manufacturing line speeds up to 10 times faster than those that can be used to prepare such an article in the absence of an organic titanate primer.

### Brief Description of the Drawings

Figure 1 is a schematic exploded, cross sectional view of various elements that can be included in a glazing prelaminate or glazing laminate. The surface of the functional film is treated with an organic titanate primer.
Figure 2 is a schematic exploded, cross sectional view of various elements that can be included in a glazing prelaminate or glazing laminate. An adhesive region containing a reacted organic titanate primer is between the functional film and the shock dissipating layer.

### Detailed Description of the Invention

The present invention provides glazing prelaminates and methods of making glazing prelaminates. The glazing prelaminates include a functional film adhered to a shock dissipating layer with an adhesion region between the functional film and the shock dissipating layer. The adhesion region contains a reacted organic titanate primer. The invention also provides glazing laminates and methods of making glazing laminates. The glazing laminates include in the following order a transparent substrate, a shock dissipating layer, an adhesion region containing a reacted organic titanate primer, and a functional film. The glazing laminates can be used in vehicular or architectural applications.

The glazing prelaminates of the present invention can be prepared at lower temperatures than used with conventional processes that do not include an organic titanate primer. The lower temperatures allow the use of higher line speeds than have been used with conventional processes to from glazing prelaminates.

In one aspect, the invention provides a method of making a glazing prelaminate. The method involves providing an organic titanate primer between a functional film and a shock dissipating layer, and adhering the functional film to the shock dissipating layer.

The functional film includes, for example, safety film, infrared reflective film, ultraviolet reflective film, polarizing film, anti-intrusion film, and the like. The functional film can function as on optical filter. In some embodiments, the functional film can be metallic, colored, dyed, pigmented, or tinted. Examples of suitable metallic films are described in U.S. Patent No. 5,091,258. Examples of suitable pigmented films are described in WO 01/58989. The functional film can have a monolithic or multi-layer construction. Examples of suitable multi-layer films are described in WO 01/96104 and U.S. Patent No. 5,877,895

Functional films having a multi-layer construction can include, for example, layers or coatings that serve mechanical, chemical, optical, barrier, or adhesive purposes. For example, one or more layers of a multi-layer functional film can provide tear resistance, abrasion resistance, slip or anti-blocking, ultraviolet absorption, fluorescence, weatherability, holographics, optical diffusion, resistance to permeation by liquids and vapors, or resistance to diffusion by liquids or vapors. Such multi-layer films are described in U.S. Patent No. 6,368,699

The functional film is typically transparent. As used herein, the term "transparent" refers to materials that allow at least some amount of light to pass through the materials. In some embodiments, transparent materials allow greater than 25 percent, greater than 50 percent, greater than 75 percent, greater than 90 percent, greater than 95 percent, or 100 percent of the light to pass through the materials.

The surface of the functional film typically contains, for example, a polyacrylate, a polyester, an ionomer, a cellulose acetate, or a combination thereof.

As used herein, the term "polyacrylate" includes a polymer or a copolymer prepared from alkyl acrylate monomers, acrylic acid monomers, alkyl methacrylate monomers, methacrylic acid monomers, acrylonitrile monomers, or like monomers. The alkyl group typically contains up to about 20 carbon atoms. In some embodiments, the alkyl group contains up to 12 or up to 6 carbon atoms. Suitable alkyl groups include methyl, ethyl, propyl, butyl, and the like.

As used herein, the term "polyester" includes a polymer or copolymer prepared by reacting at least one type of dicarboxylic acid or ester with at least one type of diol. In some embodiments, suitable polyesters include, for example, polyethylene terephthalate (PET), polyethylene 2,6-naphthalate (PEN), polyethylene isophthalate, polycarbonate, polybutylene terephthalate (PBT), and polybutylene 2,6-naphthalate (PBN).

Suitable dicarboxylic acid for preparing polyesters include, but are not limited to, terephthalic acid, isophthalic acid, phthalic acid, all isomeric naphthalenedicarboxylic acids (2,6-, 1,2-, 1, 3-, 1,4-, 1,5-, 1,6-, 1,7-, 1,8-, 2,3-, 2,4-, 2,5-, 2,7-, and 2,8-), bibenzoic acids such as 4,4'-biphenyl dicarboxylic acid and its isomers, trans-4,4'-stilbene dicarboxylic acid and its isomers, 4,4'-diphenyl ether dicarboxylic acid and its isomers, 4,4'-diphenylsulfone dicarboxylic acid and its isomers, 4,4'-benzophenone dicarboxylic acid and its isomers, halogenated aromatic dicarboxylic acids such as 2- chloroterephthalic acid and 2,5-dichloroterephthalic acid, other substituted aromatic dicarboxylic acids such as tertiary butyl isophthalic acid and sodium sulfonated isophthalic acid, cycloalkane dicarboxylic acids such as 1,4-cyclohexanedicarboxylic acid and its isomers and 2,6-decahydronaphthalene dicarboxylic acid and its isomers, bi- or multi-cyclic dicarboxylic acids (such as the various isomeric norbornane and norbornene dicarboxylic acids, adamantane dicarboxylic acids, and bicyclo-octane dicarboxylic acids), alkane dicarboxylic acids (such as sebacic acid, adipic acid, oxalic acid, malonic acid, succinic acid, glutaric acid, azelaic acid, and dodecane dicarboxylic acid.), and any of the isomeric dicarboxylic acids of the fused-ring aromatic hydrocarbons (such as indene, anthracene, pheneanthrene, benzonaphthene, fluorene and the like). Alternatively, alkyl esters of these monomers, such as dimethyl terephthalate, may be used.

Suitable diols for preparing polyesters include, but are not limited to, linear or branched alkane diols or glycols (such as ethylene glycol, propanediols such as trimethylene glycol, butanediols such as tetramethylene glycol, pentanediols such as neopentyl glycol, hexanediols, 2,2,4-trimethyl-1,3-pentanediol and higher diols), ether glycols (such as diethylene glycol, triethylene glycol, and polyethylene glycol), chain- ester diols such as 3-hydroxy-2,2-dimethylpropyl-3-hydroxy-2,2-dimethyl propanoate, cycloalkane glycols (such as 1,4-cyclohexanedimethanol and its isomers and 1,4-cyclohexanediol and its isomers), bi- or multicyclic diols (such as the various isomeric tricyclodecane dimethanols, norbomane dimethanols, norbornene dimethanols, and bicyclo-octane dimethanols), aromatic glycols (such as 1,4-benzenedimethanol and its isomers, 1,4- benzenediol and its isomers, bisphenols such as bisphenol A, 2,2'- dihydroxy biphenyl and its isomers, 4,4'-dihydroxymethyl biphenyl and its isomers, and 1,3-bis(2-hydroxyethoxy)benzene and its isomers), and lower alkyl ethers or diethers of these diols, such as dimethyl or diethyl diols.

Tri- or polyfunctional monomers, which can serve to impart a branched structure to the polyester molecules, can also be used as comonomers. They may be of either the carboxylic acid, ester, hydroxy or ether types. Examples include, but are not limited to, trimellitic acid and its esters, trimethylol propane, and pentaerythritol. Also suitable as comonomers are monomers of mixed functionality, including hydroxycarboxylic acids such as parahydroxybenzoic acid and 6-hydroxy-2-naphthalenecarboxylic acid, and their isomers, and tri- or polyfunctional comonomers of mixed functionality such as 5- hydroxyisophthalic acid and the like.

As used herein, the term "ionomer" refers to an ion containing polymer or copolymer. A suitable ionomer includes poly(ethylene-co-methacrylic acid) commercially available from E.I. Dupont de Nemours & Co. (Wilmington, DE) under the trade designation SURLYN. Other ionomers are commercially available from Exxon Chemical (Houston, TX) under the trade designation IOTEK and Network Polymers (Akron, OH).

As used herein, the phrase "cellulose acetate" refers to a polymer of copolymer containing acetate esters of cellulose. The cellulose acetate can be a diacetate or a triacetate.

The functional film is adhered to a shock dissipating layer. The shock dissipating layers imparts a protective feature to vehicular and architectural glazing laminates. As used herein, the phrase "shock dissipating" includes layers that are energy absorbing. Shock dissipating layers typically include, but are not limited to, poly(vinyl butyral) (PVB). PVB is commercially available as a film from, for example, E.I. DuPont deNemours, Co., (Wilmington, DE) under the trade designation BUTACITE, Solutia Inc. (St. Louis, MO) under the trade designation SAFLEX, H. T. Troplast (Germany) under the trade designation TROSIFOL, and Sekisui (Japan) under the trade designation S-LEC.

In some embodiments, the shock dissipating layer has a textured surface. The texture defines channels that can allow air to escape when the shock dissipating layer is adhered to the functional film.

An organic titanate primer is provided between the functional film and the shock dissipating layer. The organic titanate primer can be applied to either the shock dissipating layer or the functional film. The organic titanate primer comprises a tetra-alkyl titanate, a titanate chelate, or a combination thereof. Suitable organic titanate compounds are available from E.I. DuPont de Nemours & Co. (Wilmington, DE) under the trade designation TYZOR and from Akzo Nobel (The Netherlands).

Suitable tetra-alkyl titanates include alkyl groups having about 2 to about 10 carbon atoms. Specific tetra-alkyl titanates include, for example, tetra-ethyl titanate, tetra-n-propyl titanate, tetra-isopropyl titanate, tetra-n-butyl titanate, n-butyl titanate polymer, tetra-2-ethylhexyl titanate, and combinations thereof. The alkyl group can be substituted with one or more hydroxy groups. An example of an organic titanate having an hydroxy substituted alkyl group is tetra-(octylene glycol) titanate.

Suitable titanate chelates include, for example, titanium acetylacetonate, titanium ethylacetoacetate, titanium tetrabutanolate polymer, and combinations thereof.

The organic titanate primer can be applied to either the functional film or the shock dissipating layer in a neat form or in the form of a primer solution. In some embodiments, use of an organic titanate primer in a neat form can cause the glazing prelaminate or glazing laminate to appear hazy or opaque. The primer is typically diluted in a solvent to form a primer solution. In some embodiments, the organic titanate can be present in the primer solution at concentrations up to about 10 weight percent. The concentration of organic titanate in the primer solution is typically at least about 0.1 weight percent. For example, the concentration of the organic titanate can be in the range of about 0.1 to about 10 weight percent, about 0.1 to about 5 weight percent, or about 0.1 to about 1 weight percent of the primer solution.

The solvent for the primer solution can vary depending on the composition of the functional film and the shock dissipating layer, the organic titanate primer composition, and the application conditions. Suitable solvents include aliphatic hydrocarbons, aromatic hydrocarbons, alcohols, esters, ketones, or combinations thereof. Specific examples of suitable solvents include methanol, ethanol, isopropanol, butanol, ethylacetate, acetone, hexane, heptane, and toluene. In some embodiments, the solvent is an alcohol such as methanol, ethanol, isopropanol, butanol, or a combination thereof.

The primer solution can be applied to the functional film or the shock dissipating layer. A layer of reacted organic titanate primer forms. In some embodiments, the organic titanate primer undergoes hydrolysis, or hydrolysis and condensation. The reaction product depends on the temperature, the organic titanate composition, and the amount of water present. Water favors the hydrolysis of the organic titanate primer. Tetra-alkyl titanates typically hydrolyze more rapidly than titanate chelates. Typically, the higher the molecular weight of the alkyl group, the slower the hydrolysis rate of the tetra-alkyl titanate. If the organic titanate primer hydrolyzes too rapidly, the glazing prelaminate can appear hazy.

The primer solution is typically dried prior to adhering the functional film to the shock dissipating layer. The solvent in the organic titanate primer solution can be evaporated leaving a coating or layer of the reacted primer on the surface of the functional film or the shock dissipating layer. The reacted organic titanate primer can be present in an amount of about 1 µg/in² (0.2 µg/cm²) to about 30 µg/in² (5 µg/cm²). In some embodiments, the reacted organic titanate primer includes titanium dioxide, titanium dioxide hydrate, a polymer of titanium dioxide, or a combination thereof. The reacted titanate primer can be amorphous and form a clear, continuous or discontinuous coating on the surface of the functional film or the shock dissipating layer.

One embodiment of the invention provides a method of making a glazing prelaminate that includes applying a first organic titanate primer to a first surface of a functional film to form a first treated surface. The first treated surface of the functional film is contacted so as to adhere with a first shock dissipating layers.

In another embodiment of the method of making a glazing prelaminate, the functional film is treated on a first surface with a first organic titanate primer and on a second surface opposite the first surface with a second organic titanate primer. The organic titanate primers used to treat the first and second surfaces can be the same or different. The method includes contacting so as to adhere the first treated surface of the functional film to a first shock dissipating layer and contacting so as to adhere the second treated surface of the functional film to a second shock dissipating layer. The first and second shock dissipating layers can be the same or different. The functional film is sandwiched between the two shock dissipating layers.

Typically, the functional film and the shock dissipating layer are polymeric films that are available in roll form. The process of preparing the glazing prelaminate can be continuous or non-continuous. In a continuous process, the application of the organic titanate primer to the functional film or the shock dissipating layer is in-line with the process for adhering the functional film to the shock dissipating layer. In a non-continuous process for preparing the glazing prelaminate, the application of the organic titanate primer is conducted separately from the process of adhering the functional film to the shock dissipating layer.

The organic titanate primer solution can be applied to the functional layer or the shock dissipating layer using a variety of methods including, but not limited to, spraying, roll coating, or dipping. In some embodiments, the mode of application provides an even coating in a pre-metered manner. In one example, the organic titanate primer is applied using a gravure roll.

The shock dissipating layer can be prepared in-line or supplied as a previously prepared roll of film. To keep the shock dissipating layer from sticking to itself when supplied as a roll of film, an optional release liner can be used and removed prior to adhering the shock dissipating layer to the treated functional film. In another embodiment, the shock dissipating layer can be supplied as a film in a form without a liner and maintained at about 10 °C. Cooling decreases the tackiness of the shock dissipating layer and keeps the shock dissipating layer from sticking to itself.

If the shock dissipating layer is cooled, moderate heating may be desirable prior to adhering this layer to the functional film. Heat can be provided using, for example, radiant, conductive, or convective heat. In one embodiment, an infrared heater is positioned on one or both sides of the shock dissipating layer after it has been unrolled. In another embodiment, the unrolled shock dissipating layer can be passed over a heated roll to increase the temperature of the layer. Alternatively, or in addition to the heating the shock dissipating layer, the functional layer can be heated.

The functional film and the shock dissipating layer can be adhered by rolling both the functional film and the shock dissipating layers together on the same roll or by pass them through one or more sets of rollers. Glazing prelaminates that include an organic titanate primer provided between the functional film and the shock dissipating layer can be prepared at temperatures less than about 120 °F (49 °C). In some embodiments, the glazing prelaminates can be formed at temperature less than about 100 °F (38°C) or less than about 80 °F (27 °C). For example, the glazing prelaminates of the present invention can be prepared at a temperature in the range of about 50 °F (10 °C) to about 100 °F (38°C) or in the range of about 60 °F (16°C) to about 80 °F (27 °C).

The glazing prelaminates can be formed at line speeds up to 10 to 30 times faster than such an article can be prepared without the use of the organic titanate primer between the functional film and the shock dissipating layer. The line speeds are typically greater than about 2 ft/min (1 cm/sec) or greater than about 10 ft/min (5 cm/sec. In some embodiments, the line speeds for preparing glazing prelaminates of the invention can be greater than 15 ft/min (8 cm/sec). Line speeds up to about 100 ft/min (50 cm/sec), up to about 150 ft/min (75 cm/sec), or up to about 300 ft/min (150 cm/sec) can be used. For example, the line speed can be in the range of about 2 ft/min (1 cm/sec) to about 300 ft/min (150 cm/sec), about 10 ft/min (5 cm/sec) to about 150 ft/min (75 cm/sec), or about 15 ft/min (8 cm/sec) to about 100 ft/min (50 cm/sec). In other embodiments, line speeds in the range of about 2 ft/min (1 cm/sec) to about 100 ft/min (50 cm/sec) can be used.

Optionally, pressure can be applied to form the glazing prelaminate of the invention. For example, a nip roll apparatus, a pressurized chamber, or a platen can be used to apply pressure. In some embodiments, the pressure is about 15 lbs/in (269 kg/m) to about 100 lbs/in (1790 kg/m).

The adhesive strength of the glazing prelaminate can be sufficient to keep the functional film and the shock dissipating layers from separating during further processing and handling. For example, the adhesive strength between the treated surface of the functional film and the shock dissipating layer is in the range of about 10 to about 50 N/m, about 10 to about100 N/m, or about 10 to about 300 N/m, as measured using the 180 degree T-peel test set forth below.

In some embodiments of a glazing prelaminate, a portion of the functional film is removed near the outer edges of the glazing prelaminates. Examples of such a technique are in U.S. Patent Application Serial No. 10/038642, in its entirety. The functional film and the shock dissipating layers can be partially separated without damaging either the functional film or the shock dissipating layer.

The process conditions can be varied to adjust the adhesion between the different layers of the glazing prelaminate. Lower adhesive strengths can be obtained, for example, by decreasing the pressure applied to the layers during the adhesion process, by operating at lower film and ambient temperatures, by decreasing the amount of organic titanate primer provided between the functional film and the shock dissipating layer, and by increasing the line speed (e.g., decreasing the dwell time).

In some embodiments, a shock dissipating layer having a textured surface is used to decrease the adhesive strength of the glazing prelaminate. Textured surfaces can be used advantageously with the relatively low temperatures used to prepare the glazing prelaminates of the invention. The textured surface can be retained at temperatures up to about 100 °F (38 °C). A glazing prelaminate can be formed in which only a portion of the shock dissipating layer adheres to the functional film. For example, in a shock dissipating layer having a surface textured with convex and concave regions, a glazing prelaminate can be formed in which the shock dissipating layer adheres to the functional film only in the convex regions. The functional film can typically be removed from the outer portions of the glazing prelaminate prior to forming a glazing laminate.

Following the adhesion step, the glazing prelaminate can optionally be placed on an x-y table and cut to fit a particular pattern for incorporation into a vehicular or architectural glazing laminate. The cutting step and the adhesion step to be conducted in-line or at the same location, which reduces the processing costs for preparing the glazing prelaminate.

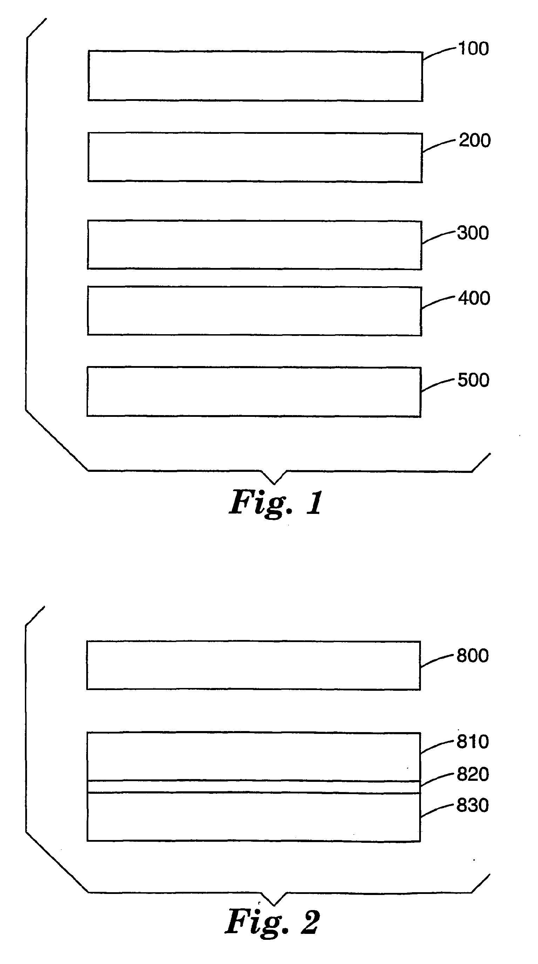

A second aspect of the invention provides a glazing prelaminate. As shown in **Figure 2****,** the glazing prelaminate includes a functional film **830** adhered to a shock dissipating layer **810** with an adhesive region **820** between the functional film and the shock dissipating layer. The adhesive region contains a reacted organic titanate primer.

In one embodiment of the glazing prelaminate shown in **Figure 1****,** the glazing prelaminate includes a functional film **400** having a first surface treated with a first organic titanate primer to form a first treated surface **300.** A shock dissipating layer **200** is adhered to the treated surface of the functional film.

In another embodiment of the glazing prelaminate shown in **Figure 1****,** the functional film **400** has a first surface treated with a first organic titanate primer to form a first treated surface **300** and a second surface, opposite the first surface, treated with a second organic titanate primer to form a second treated surface **500.** The first and second organic titanate primer can be the same or different. A first shock dissipating layer **200** is adhered to the first treated surface of the functional film and a second shock dissipating layer **600** is adhered to the second treated surface of the functional film. The treated functional film is sandwiched between two shock dissipating layers.

In a third aspect, the invention provides a method of making a glazing laminate. The method involves providing an organic titanate primer between a functional film and a shock dissipating layer, adhering the functional film to the shock dissipating layer, and bonding a transparent substrate to the shock dissipating layer such that the shock dissipating layer is between the functional film and the transparent substrate.

The transparent substrate can be prepared from glass, polycarbonate, polyacrylate, or any other material having the properties desired for the particular application. The transparent substrate can be rigid or flexible and can be flat or curved.

In one embodiment, the glazing laminate can be formed by applying a first organic titanate primer to a first surface of a functional film to form a first treated surface of the functional film, contacting so as to adhere the first treated surface of the functional film with a first shock dissipating layer, and bonding a first transparent substrate to the first shock dissipating layer. The first shock dissipating layer is sandwiched between the first transparent substrate and the first treated surface of the functional film.

In another embodiment, the functional film is treated on a first surface with a first organic titanate primer and on a second surface, opposite the first surface, with a second organic titanate primer. The organic titanate primer used to treat the first and second surfaces can be the same or different. The method involves contacting so as to adhere the first treated surface of the first functional film with a first shock dissipating layer and contacting so as to adhere the second treated surface of the functional film with a second shock dissipating layer. The first and second shock dissipating layers can be the same or different. The functional film is sandwiched between the two shock dissipating layers. The first shock dissipating layer is bonded to a first transparent substrate and the second shock dissipating layer is bonded to a second transparent substrate such that the shock dissipating layers are between the treated functional film and the transparent substrates.

The bonding of the transparent substrate to the shock dissipating layer can involve the application of heat, pressure, or a combination thereof. For example, an autoclave can be use to form the glazing laminate. In some embodiments, the autoclave conditions include temperatures up to about 150 °C, pressure up to about 200 psi (1400 kPa), and cycle times up to about 120 minutes. For example, the glazing laminate can be autoclaved at a temperature in the range of about 130 °C to about 150 °C and at a pressure in the range of about 170 psi (1190 kPa) to about 200 psi (1400 kPa) for about 60 minutes to about 120 minutes. After bonding, the glazing laminate can have an adhesive strength between the functional film and the shock dissipating layer in the range of about 10 to about 300 N/m or in the range of about 10 to about 700 N/m using a 180 degree T-peel test.

In some embodiments, the glazing laminate can be prepared from a glazing prelaminate. In other embodiments, the shock dissipating layer can be bonded to the transparent substrate prior to adhereing the shock dissipating layer to the functional film.

In a fourth aspect, the invention provides a glazing laminate. As shown in **Figure 2****,** the glazing laminate includes a functional film **830** adhered to a shock dissipating layer **810** with an adhesive region **820** between the functional film and the shock dissipating layer. The adhesive region contains a reacted organic titanate primer. The shock dissipating layer is bonded to a transparent substrate such that the shock dissipating layer is between the functional film and the transparent substrate.

In one embodiment shown in **Figure 1****,** the glazing laminate includes a functional film **400** having a first surface treated with a first organic titanate primer to form a first treated surface **300.** A first shock dissipating layer **200** is adhered to the first treated surface of the functional film. A transparent substrate **100** is bonded to the first shock dissipating layer such that the shock dissipating layer is between the functional film and the first transparent substrate.

In another embodiment shown in **Figure 1****,** the glazing laminate includes a functional film **400** having a first surface treated with a first organic titanate primer to form a first treated surface **300** and a second surface treated with a second organic titanate primer to form a second treated surface **500.** The first and second organic titanate primer can be the same or different. A first shock dissipating layer **200** is adhered to the first treated surface of the functional film and a second shock dissipating layer **600** is adhered to the second treated surface of the functional film. The first and second shock dissipating layer can be the same or different. A first transparent substrate **100** is bonded to the first shock dissipating layer and a second transparent substrate **700** is bonded to the second shock dissipating layer. The first shock dissipating layer is between the functional film and the first transparent substrate and the second shock dissipating layer is between the functional film and the second transparent substrate.

### EXAMPLES

### Test Methods

### 180 degree T-peel Test

The 180 degree T-peel test, used to measure the adhesive strength, was conducted at 73.4 ± 3.6 °F (23 ± 2 °C) using a MTS force tester or equivalent having a 200 pound (0.91 kg) load cell. The glazing prelaminate was cut into 1" x 8" (2.5 cm x 20.3 cm) strips. Approximately 1 in (2.5 cm) of the glazing prelaminate was carefully separated by hand to allow for mounting to the pneumatic grips of the force tester. The shock dissipating layer was clamped in the lower MTS pneumatic grip and the functional film was clamped in the upper MTS pneumatic grip. The distance between the grips was two inches. The crosshead speed was set to 12 in/min (30.5 cm/min). The total pull length was 100 mm (3.9 in) and the data was collected starting at 25 mm (1 in) and ending at 100 mm (3.9 in). The average peel force was recorded. The test was repeated with two other samples. The average of the three samples was recorded.

### Film Temperature

The temperature of the film was measured with an infrared pyrometer.

### Example 1

A functional film, designated SRF, was treated with a primer solution containing tetra-isopropyl titanate. The functional film was an infrared reflecting multilayered polymeric film, described in U.S. Patent Application No. 09/590,924 and having a thickness of approximately 51 µm. The functional film was coated with a 0.5 wt% solution of Dupont TYZOR (tetra-isopropyl titanate "TPT") in isopropyl alcohol. The primer solution was prepared in a 55 gallon drum equipped with a drum mixer to mix the TYZOR into the isopropyl alcohol. After mixing, the primer solution was transported to a gravure coater where a 150 line gravure roll was used to apply the organic titanate primer solution to the functional film. The coated functional film was pulled through a ten foot long oven heated to 66°C to dry, at 120 ft/min (61 cm/sec). Both sides of the functional film were coated as described above.

The organic titanate primer treated functional film was laminated to a 15 mil PVB layer (SAFLEX AR-11) available from SOLUTIA (St. Louis, MO) using a two-roll rubber coated nip roll having a durometer of about 60-65. The gap between the rollers was 0.0 in (0.0 cm). The roller speed was approximately 100 ft/min (51 cm/sec). The materials and equipment were conditioned to 22 °C.

Using the 180 degree T-peel test described above, the adhesive strength was 0.2 1b/in (35 N/m) between the treated surface of the functional film and the PVB layer.

### Comparative Example 2

Using the same pre-lamination conditions set forth in Example 1, film samples were individually treated as follows:

Unprimed polymeric infrared reflecting film (as described in U. S. Patent Application No. 09/590,924; referred to as SRF)
- Comp. Ex. 2-1: Air corona treated SRF.
- Comp. Ex. 2-2: Nitrogen corona SRF
- Comp. Ex. 2-3: Dupont Melinex 454 PET film

The 180 degree T-peel test results indicated that a measurable bond did not form.

### Example 3

To evaluate various primers and surface treatments in terms of their ability to bond to the smooth side of HT Troplast Trosifol PV3510 PVB at room temperature with moderate pressure, the following samples were prepared and tested:
- Ex. 3-1: 0.125 wt% Tyzor TPT primed SRF
- Ex. 3-2: 0.5 wt% Tyzor TPT Primed SRF
- Ex. 3-3: 1 wt% Tyzor TPT primed SRF
- Comp. Ex. 3-1: Unprimed SRF
- Comp. Ex. 3-2: Air corona treated SRF
- Comp. Ex. 3-3: Nitrogen corona treated SRF
- Comp. Ex. 3-4: Dupont Melinex 454 film

The primed film samples were mated up to the smooth side of HT Troplast Trosifol PV3510 PVB then passed through a rubber coated nip. The nip rolls were 4 in (10.2 cm) diameter, coated with 60-65 durometer rubber, the pressure on the nip was 95 psi (1700 kg/m) with 1 in (2.5 cm) diameter stacked air cylinders on both ends of the nip. The line speed was approximately 10 ft/min (5.1 cm/sec). The temperature of the room, films, and equipment was 21°C.

Only Tyzor TPT primed film (all concentrations) adhered to the smooth side of HT Troplast PV3510 PVB at these conditions. All other treatments and coatings did not enhance or allow a bond to form.

### Example 4

To evaluate various primers and surface treatments in terms of their ability to bond to the smooth side of Solutia Saflex AR-11 PVB at room temperature with moderate pressure, the following samples were prepared and tested:
- Ex. 4-1: 0.125% Tyzor TPT primed SRF
- Ex. 4-2: 0.5% Tyzor TPT primed SRF
- Ex. 4-3: 1 % Tyzor TPT primed SRF Unprimed SRF
- Comp. Ex. 4-1: Air corona treated SRF
- Comp. Ex. 4-2: Nitrogen corona treated SRF

- Comp. Ex. 4-3: Dupont Melinex 454 film

The primed film samples were mated up to the smooth side of Solutia AR-11 PVB then passed through a rubber coated nip in an attempt to create a bond between the two films. The nip rolls were 4 inch (10.2 cm) in diameter, coated with 60-65 durometer rubber, the pressure on the nip was 95 psi (1700 kg/m) with 1 inch (2.5 cm) diameter stacked air cylinders on both ends of the nip).

The line speed was approximately 10 ft/min (5.1 cm/sec). The temperature of the room, films, and equipment was 21°C.

Only Tyzor TPT primed film (all concentrations) adhered to the smooth side of Solutia AR-11 PVB at these conditions. All other treatments and coatings did not enhance or allow a bond to form.

### Example 5

Tyzor TPT was evaluated as a primer to bond various polymeric films to PVB under low temperature and pressure conditions.

A 0.5 wt% solution of Tyzor TPT in methanol was prepared by placing 298.5 grams methanol and 1.5 grams of Tyzor TPT in a glass jar. The jar was capped and shaken for 30 seconds to mix the organic titanate in the methanol. Exposure to atmospheric moisture was minimized.

Each film sample was cut to 10 in x 10 in (24.5 cm x 25.4 cm) square. The sample was taped to a 12 in x 12 in x ¼ in (30.5 cm x 30.5 cm x 0.6 cm) thick glass plate. Three grams of the primer solution was dispensed on the center of the film. A soft polyester cloth was used to evenly spread the solution over the exposed surface of the film sample. Excess primer solution was absorbed by the polyester cloth. Immediately after coating, the film sample was placed into a 90 °C oven to dry for 2 minutes.

A laminate was prepared using a Basix B-400 laminator manufactured by Hix Corporation (Pittsburg, Kansas). The top plate temperature was set at 30 °C and a moderate pressure was used. A 6 in x 8 in (15.2 cm x 20.3 cm) piece of 15 mil Solutia RK-11 PVB was centered on the lower plate with the smoother side facing up. The film sample was centered on the PVB with the primed side facing the PVB. The press was closed for twelve seconds to bond the two components. After twelve seconds the press was opened and the sample removed.

After the films were laminated to 15 mil Solutia RK-11 PVB, the laminates were tested for 180 degree T-peel force.

**Table 1: Evaluation of Various Functional Films**

| **Film** | **Thickness** | **Primer** | **180° peel force (N/m)** |
|---|---|---|---|
| SRF (PET) | 2 mil | TPT | 19 |
| SRF (PET) | 2 mil | none | 1 |
| SRF (PEN) | 2 mil | TPT | 20 |
| SRF (PEN) | 2 mil | none | 0 |
| SRF (PET) | 2 mil | Corona | 2 |
| Surlyn | 7 mil | TPT | 31 |
| Surlyn | 7 mil | none | 0 |
| Dupont melinex 454 | 4 mil | TPT | 28 |
| Dupont Melinex 454 | 4 mil | none | 1 |
| Polycarbonate | 7 mil | TPT | 19 |
| Polycarbonate | 7 mil | none | 0 |
| Acetate | 5 mil | TPT | 13 |
| Acetate | 5 mil | none | 0 |
| Polyethylene | 2 mil | TPT | 0 |
| Polyethylene | 2 mil | none | 0 |
| Polypropylene | 3 mil | TPT | 0 |
| Polypropylene | 3 mil | none | 0 |
| PVC | 4 mil | TPT | 0 |
| PVC | 4 mil | none | 0 |
| PFA | 2 mil | TPT | 0 |
| PFA | 2 mil | none | 0 |
| FEP | 2 mil | TPT | 0 |
| FEP | 2 mil | none | 0 |

| | | | |
|---|---|---|---|
| PFA = perfluoroalkoxy fluorocarbon FEP = fluorinated ethylene-propylene PVC = plasticized polyvinyl chloride Dupont melinex 454 = PET PET = Polyethylene terephthalate PEN = polyethylene naphthalene Surlyn = Ionomer Corona = 0.65 j/cm² TPT = Tetraisopropyl titanate Acetate = cellulose acetate | | | |

Tyzor TPT effectively performs as a primer/adhesion promoter to PVB at low temperatures and pressures for a variety of polymeric films. The PVB shock dissipating layer adhered to the following films with the use of the organic titanate primer: polyester (including PEN, PET, and polycarbonate), ionomer; and cellulose acetate.

### Example 6

A SRF film was coated with a 0.5% Tyzor TPT solution in IPA using a 150 line gravure roller and dried in an oven set at 150 °F (66 °C) (Example 6-1). Another sample of SRF film was not primed (Comparative Example 6-1). PVB was contacted to the primed and unprimed films without the use of a pressure applying nip roll.

The SRF functional film was contacted to the smooth side of Solutia AR-11 PVB shock dissipating layer by winding them together on the same core. The PVB was interleafed with a 1 mil textured polyethylene film to prevent blocking. The machine and materials were conditioned to 72 °F (22 °C). The machine used was an Orca graphics laminator running at 6 feet per minute. The winding torque was 35%. 50 meters of each sample was produced in this fashion. The sample material was stored at 72 °F (22 °C).

Three days later, the adhesive strength was measured using the 180 degree T-peel test. Only the organic titanate primer treated SRF film created a bond. The peel force was 15 N/m. The un-primed film did not form a measurable bond under these conditions.

From the above disclosure of the general principles of the present invention and the preceding detailed description of exemplary embodiments, those skilled in this art will readily comprehend the various modifications, re-arrangements and substitutions to which the present invention is susceptible. Therefore, the scope of the invention should be limited only by the following claims and equivalents thereof.

## Claims

1. A method comprising:
providing an organic titanate primer between a functional film and a shock dissipating layer; and
adhering together the functional film and the shock dissipating layer.

2. The method of claim 1, further comprising bonding together a transparent substrate and the shock dissipating layer, wherein the shock dissipating layer is between the functional film and the transparent substrate.

3. The method of claims 1 or 2, wherein the shock dissipating layer comprises poly (vinyl butyral), and the organic titanate primer comprises a titanate chelate, a tetra-alkyl titanate, or a combination thereof.

4. A method for making a glazing prelaminate according to claims 1-3 comprising:
(a) applying a first organic titanate primer to a first surface of a functional film to form a first treated surface of the functional film; and
(b) contacting so as to adhere together the first treated surface of the functional film and a first shock dissipating layer to form a glazing prelaminate.

5. A method of making a glazing laminate comprising:
applying steps (a) and (b) of claim 4; and
bonding together a first transparent substrate and the first shock dissipating layer,
wherein the first shock dissipating layer is between the first treated surface of the functional film and the first transparent substrate.

6. The method of claim 4 or 5, wherein the first shock dissipating layer has a temperature of less than about 120 °F (49 °C) during said contacting.

7. The method of claim 4 or 5, wherein the first shock dissipating layer has a temperature of about 50 °F (10 °C) to about 100 °F (38 °C) during said contacting.

8. The method of claim 1, wherein the first surface of the functional film comprises a polyester, polyacrylate, ionomer, cellulose acetate, or a combination thereof or wherein the first surface of the functional film comprises a polycarbonate, polyethylene terephthalate, polyethylene isophthalate, polyethylene 2,6-naphthalate, polybutylene terephthalate, polybutylene 2,6-napthathalate, or a combination thereof.

9. The method of claim 1, wherein the functional film comprises an infrared reflective film, a ultraviolet reflective film, a safety film, a polarizing film, anti-intrusion film, or a combination thereof.

10. The method of claim 1, wherein the shock dissipating layer comprises an infrared reflective film and the shock dissipating layer comprises poly (vinyl butyral).

11. The method of claim 1, wherein the first organic titanate primer hydrolyzes after said applying and comprises a tetra-alkyl titanate, e.g tetra-ethyl titanate, tetra-isopropyl titanate, tetra-n-propyl titanate, tetra-n-butyl titanate, n-butyl titanate polymer, tetra-2-ethylhexyl titanate, tetra-(octylene glycol) titanate, or a combination thereof. , a titanate chelate, e.g. titanium acetylacetonante, titanium ethylacetoacetate, titanium tetrabutanolate polymer, or a combination thereof, or a combination of a tetra-alkyl titanate and a titanate chelate.

12. The method of claim 1, wherein the first organic titanate primer comprises tetra-isopropyl titanate.

13. The method of claim 1, wherein the first organic titanate primer is in the form of a primer solution comprising in the range of about 0.1 to about 10 weight percent organic titanate based on the weight of the primer solution.

14. The method of claim 4 or 5, wherein after said contacting the glazing prelaminate has an 180 degree T-peel between the functional film and the first shock dissipating layer in the range of about 10 to about 300 N/m.

15. The method of claim 4 or 5, wherein said contacting is at a speed in the range of about 1 cm/sec to about 150 cm/sec.

16. The method of claim 4 or 5, wherein the functional film has a second surface opposite the first surface and wherein said method further comprises:
applying a second organic titanate primer to the second surface of the functional film to form a second treated surface of the functional film; and
contacting so as to adhere together the second treated surface of the functional film and a second shock dissipating layer.

17. The method of claim 5, wherein said method further comprises applying heat, applying pressure, or a combination thereof to at least one of the functional film, the first shock dissipating layer, or the first transparent substrate so as to form a glazing laminate.

18. The method of claim 5 or 17, wherein an 180 degree T-peel between the functional film and the first shock dissipating layer is in the range of about 10 to about 700 N/m.

19. The method of claim 5, wherein the functional film has a second surface opposite the first surface and said method further comprises:
applying a second organic titanate primer to the second surface of the functional film to form a second treated surface of the functional film;
contacting so as to adhere together the second treated surface of the functional film and a second shock dissipating layer; and
bonding together the second shock dissipating layer and a second transparent substrate,
wherein the second shock dissipating layer is between the second treated surface of the functional film and the second transparent substrate.

20. The method of claim 4 or 5, wherein the first organic titanate primer is applied in an amount in the range of about 1 µg/in² (0.2 µg/cm²) to about 30 µg/in² (6 µg/cm²).

21. An article comprising a functional film adhered to a shock dissipating layer with an adhesion region between said functional film and said shock dissipating layer, wherein said adhesion region comprises a reacted organic titanate primer.

22. The article of claim 21, further comprising a transparent substrate bonded to said shock dissipating layer, wherein said shock dissipating layer is between said functional film and said transparent substrate.

23. The article of claims 21 or 22, wherein the shock dissipating layer comprises poly (vinyl butyral), and the reacted organic titanate primer comprises at least one of titanium dioxide, titanium dioxide hydrate, or a polymeric titanium dioxide.

24. A glazing prelaminate article according to claims 21-23, comprising:
(a) a functional film having a first surface treated with a first organic titanate primer to form a first treated surface; and
(b) a first shock dissipating layer adhered to said first treated surface.

25. The glazing prelaminate article of claim 24, wherein said functional film has an opposite surface treated with a second organic titanate primer to form a second treated surface and wherein the glazing prelaminate further comprises a second shock dissipating layer adhered to said second treated surface.

26. The glazing prelaminate article of claim 24 or 25, wherein said functional film comprises an infrared reflective film, a ultraviolet reflective film, a safety film, a polarizing film, an anti-intrusive film, or a combination thereof.

27. The glazing prelaminate article of claim 24 or 25, wherein the first surface of said functional film comprises a polyester, polyacrylate, ionomer, cellulose acetate, or a combination thereof.

28. The glazing prelaminate article of claim 24 or 25, wherein said shock dissipating layer comprises a poly(vinyl butyral).

29. The glazing prelaminate article of claim 24 or 25, wherein said first treated surface comprises at least one of titanium dioxide, titanium dioxide hydrate, or a polymeric titanium dioxide.

30. The glazing prelaminate article of claim 24 or 25, wherein said functional film comprises a reflective infrared film, the first organic titanate primer comprises a tetra-alkyl titanate, and the first shock dissipating layer comprises a poly(vinyl butyral).

31. A glazing laminate article comprising:
(a) a glazing prelaminate article according to claim 24; and
(b) a first transparent substrate bonded to said first shock dissipating layer,
wherein said first shock dissipating layer is between said functional film and said first transparent substrate.

32. The glazing laminate article of claim 31, wherein said functional film has an opposite surface treated with a second organic titanate primer to form a second treated surface and wherein the glazing laminate further comprises:
a second shock dissipating layer adhered to said second treated surface; and
a second transparent substrate bonded to said second shock dissipating layer,
wherein said second shock dissipating layer is between said functional film and said second transparent substrate.

33. The glazing laminate article of claim 31 or 32, wherein said first treated surface comprises at least one of titanium dioxide, titanium dioxide hydrate, or a polymeric titanium dioxide.

34. The glazing laminate article of claim 31 or 32, wherein said functional film comprises a reflective infrared film, the first organic titanate primer comprises a tetra-titanate, said first shock dissipating layer comprises poly(vinyl butyral), and said first transparent substrate comprises glass.

## Patentansprüche

1. Verfahren, umfassend:
Bereitstellen einer organischen Titanatgrundierung zwischen einer funktionellen Schicht und einer stoßableitenden Schicht; und
Zusammenkleben der funktionellen Schicht und der stoßableitenden Schicht.

2. Verfahren nach Anspruch 1, ferner umfassend das Verbinden eines durchsichtigen Substrats mit der stoßableitenden Schicht, wobei sich die stoßableitende Schicht zwischen der funktionellen Schicht und dem durchsichtigen Substrat befindet.

3. Verfahren nach den Ansprüchen 1 oder 2, wobei die stoßableitende Schicht Polyvinylbutyral umfasst und die organische Titanatgrundierung eine Titanat-Chelatverbindung, ein Tetraalkyltitanat oder eine Kombination daraus umfasst.

4. Verfahren zur Herstellung eines Verglasungsvorlaminats nach den Ansprüchen 1 bis 3, umfassend:
(a) Aufbringen einer ersten organischen Titanatgrundierung auf eine erste Fläche einer funktionellen Schicht, um eine erste behandelte Fläche der funktionellen Schicht herzustellen; und
(b) Inkontaktbringen der ersten behandelten Fläche der funktionellen Schicht und einer ersten stoßableitenden Schicht, um diese zwecks Bildung eines Verglasungsvorlaminats miteinander zu verkleben.

5. Verfahren zur Herstellung eines Verglasungslaminats, umfassend:
Anwenden der Schritte (a) und (b) von Anspruch 4; und
Verbinden eines ersten durchsichtigen Substrats mit der ersten stoßableitenden Schicht,
wobei die erste stoßableitende Schicht sich zwischen der ersten behandelten Fläche der funktionellen Schicht und dem ersten durchsichtigen Substrat befindet.

6. Verfahren nach den Ansprüchen 4 oder 5, wobei die erste stoßableitende Schicht beim Inkontaktbringen eine Temperatur von weniger als ungefähr 120 °F (49 °C) hat.

7. Verfahren nach den Ansprüchen 4 oder 5, wobei die erste stoßableitende Schicht beim Inkontaktbringen eine Temperatur von ungefähr 50 °F (10 °C) bis ungefähr 100 °F (38 °C) hat.

8. Verfahren nach Anspruch 1, wobei die erste Fläche der funktionellen Schicht einen Polyester, ein Polyacrylat, Ionomer, Celluloseacetat oder eine Kombination daraus umfasst oder wobei die erste Fläche der funktionellen Schicht ein Polycarbonat, Polyethylenterephthalat, Polyethylenisophthalat, Polyethylen-2,6-naphthalat, Polybutylenterephthalat, Polybutylen-2,6-naphthalat oder eine Kombination daraus umfasst.

9. Verfahren nach Anspruch 1, wobei die funktionelle Schicht eine infrarot-reflektierende Schicht, eine ultraviolett-reflektierende schicht, eine Sicherheitsschicht, eine polarisierende Schicht, eine Schicht, die vor unerwünschtem Eindringen schützt, oder eine Kombination daraus umfasst.

10. Verfahren nach Anspruch 1, wobei die stoßableitende Schicht eine infrarot-reflektierende Schicht umfasst und wobei die stoßableitende Schicht Polyvinylbutyral umfasst.

11. Verfahren nach Anspruch 1, wobei die erste organische Titanatgrundierung nach dem Aufbringen eine Hydrolyse erfährt und ein Tetraalkyltitanat, z.B. Tetraethyltitanat, Tetraisopropyltitanat, Tetra-n-propyltitanat, Tetra-n-butyltitanat, n-Butyltitanatpolymer, Tetra-2-ethylhexyltitanat, Tetra(octylenglykol)titanat oder eine Kombination daraus, eine Titanat-Chelatverbindung, z.B. Titanacetylacetonat, Titanethylacetoacetat, Titantetrabutanolatpolymer oder eine Kombination daraus, oder aber eine Kombination aus einem Tetraalkyltitanat und einer Titanat-Chelatverbindung umfasst.

12. Verfahren nach Anspruch 1, wobei die erste organische Titanatgrundierung Tetraisopropyltitanat umfasst.

13. Verfahren nach Anspruch 1, wobei die erste organische Titanatgrundierung in Form einer Grundierungslösung vorliegt, welche zwischen ungefähr 0,1 und ungefähr 10 Gewichtsprozent an organischem Titanat umfasst, bezogen auf das Gewicht der Grundierungslösung.

14. Verfahren nach den Ansprüchen 4 oder 5, wobei das Verglasungsvorlaminat nach dem Inkontaktbringen einen 180°-Schälfestigkeitswert von ungefähr 10 bis ungefähr 300 N/m zwischen der funktionellen Schicht und der ersten stoßableitenden Schicht aufweist.

15. Verfahren nach den Ansprüchen 4 oder 5, wobei das Inkontaktbringen mit einer Geschwindigkeit in der Größenordnung von ungefähr 1 cm/s bis ungefähr 150 cm/s erfolgt.

16. Verfahren nach den Ansprüchen 4 oder 5, wobei die funktionelle Schicht eine zweite Fläche aufweist, die der ersten Fläche gegenüberliegt, wobei das Verfahren darüber hinaus Folgendes umfasst:
Aufbringen einer zweiten organischen Titanatgrundierung auf eine zweite Fläche der funktionellen Schicht, um eine zweite behandelte Fläche der funktionellen Schicht herzustellen; und
Inkontaktbringen der zweiten behandelten Fläche der funktionellen Schicht und einer zweiten stoßableitenden Schicht, um diese miteinander zu verkleben.

17. Verfahren nach Anspruch 5, wobei das Verfahren darüber hinaus die Anwendung von Wärme, die Anwendung von Druck oder einer Kombination daraus auf mindestens ein Element, gewählt aus der funktionellen Schicht, der ersten stoßableitenden Schicht und dem ersten durchsichtigen Substrat, umfasst, um auf diese Weise ein Verglasungslaminat zu bilden.

18. Verfahren nach den Ansprüchen 5 oder 17, wobei der 180°-Schälfestigkeitswert zwischen der funktionellen Schicht und der ersten stoßableitenden Schicht in der Größenordnung von ungefähr 10 bis ungefähr 700 N/m liegt.

19. Verfahren nach Anspruch 5, wobei die funktionelle Schicht eine zweite Fläche aufweist, die der ersten Fläche gegenüberliegt, wobei das Verfahren darüber hinaus Folgendes umfasst:
Aufbringen einer zweiten organischen Titanatgrundierung auf die zweite Fläche der funktionellen schicht, um eine zweite behandelte Fläche der funktionellen Schicht herzustellen;
Inkontaktbringen der zweiten behandelten Fläche der funktionellen Schicht und einer zweiten stoßableitenden Schicht, um diese miteinander zu verkleben; und
Verbinden der zweiten stoßableitenden Schicht mit einem zweiten durchsichtigen Substrat,
wobei die zweite stoßableitende Schicht sich zwischen der zweiten behandelten Fläche der funktionellen Schicht und dem zweiten durchsichtigen Substrat befindet.

20. Verfahren nach den Ansprüchen 4 oder 5, wobei die erste organische Titanatgrundierung in einer Menge in der Größenordnung von ungefähr 1 µg/in² (0,2 µg/cm²) bis ungefähr 30 µg/in² (6 µg/cm²) aufgebracht wird.

21. Artikel, umfassend eine funktionelle Schicht, die auf eine stoßableitende Schicht geklebt ist, wobei sich zwischen der funktionellen Schicht und der stoßableitenden Schicht ein Klebebereich befindet,
wobei der Klebebereich eine umgesetzte organische Titanatgrundierung umfasst.

22. Artikel nach Anspruch 21, ferner umfassend ein durchsichtiges Substrat, das mit der stoßableitenden Schicht verbunden ist, wobei sich die stoßableitende Schicht zwischen der funktionellen Schicht und dem durchsichtigen Substrat befindet.

23. Artikel nach den Ansprüchen 21 oder 22, wobei die stoßableitende Schicht Polyvinylbutyral umfasst und die umgesetzte organische Titanatgrundierung mindestens ein Element, gewählt aus Titandioxid, Titandioxidhydrat und einem polymeren Titandioxid, umfasst.

24. Verglasungsvorlaminat-Artikel nach den Ansprüchen 21 bis 23, umfassend:
(a) eine funktionelle Schicht, deren erste Fläche mit einer ersten organischen Titanatgrundierung behandelt wird, um eine erste behandelte Fläche herzustellen; und
(b) eine erste stoßableitende Schicht, welche auf die erste behandelte Fläche geklebt ist.

25. Verglasungsvorlaminat-Artikel nach Anspruch 24, wobei die funktionelle Schicht eine gegenüberliegende Fläche aufweist, die mit einer zweiten organischen Titanatgrundierung behandelt ist, um eine zweite behandelte Fläche zu bilden, und wobei das Verglasungsvorlaminat darüber hinaus eine zweite stoßableitende Schicht umfasst, die auf die zweite behandelte Fläche geklebt ist.

26. Verglasungsvorlaminat-Artikel nach den Ansprüchen 24 oder 25, wobei die funktionelle Schicht eine infrarot-reflektierende Schicht, eine ultraviolett-reflektierende Schicht, eine Sicherheitsschicht, eine polarisierende Schicht, eine Schicht, die vor unerwünschtem Eindringen schützt, oder eine Kombination daraus umfasst.

27. Verglasungsvorlaminat-Artikel nach den Ansprüchen 24 oder 25, wobei die erste Fläche der funktionellen Schicht einen Polyester, ein Polyacrylat, Ionomer, Celluloseacetat oder eine Kombination daraus umfasst.

28. Verglasungsvorlaminat-Artikel nach den Ansprüchen 24 oder 25, wobei die stoßableitende Schicht ein Polyvinylbutyral umfasst.

29. Verglasungsvorlaminat-Artikel nach den Ansprüchen 24 oder 25, wobei die erste behandelte Fläche mindestens ein Element, gewählt aus Titandioxid, Titandioxidhydrat und einem polymeren Titandioxid, umfasst.

30. Verglasungsvorlaminat-Artikel nach den Ansprüchen 24 oder 25, wobei die funktionelle Schicht eine infrarot-reflektierende Schicht umfasst, die erste organische Titanatgrundierung ein Tetraalkyltitanat umfasst und die erste stoßableitende Schicht ein Polyvinylbutyral umfasst.

31. Verglasungslaminat-Artikel, umfassend:
(a) einen Verglasungsvorlaminat-Artikel nach Anspruch 24; und
(b) ein erstes durchsichtiges Substrat, welches mit der ersten stoßableitenden Schicht verbunden ist, wobei sich die erste stoßableitende Schicht zwischen der funktionellen Schicht und dem ersten durchsichtigen Substrat befindet.

32. Verglasungslaminat-Artikel nach Anspruch 31, wobei die funktionelle Schicht eine gegenüberliegende Fläche aufweist, die mit einer zweiten organischen Titanatgrundierung behandelt ist, um eine zweite behandelte Fläche zu bilden, und wobei das Verglasungslaminat darüber hinaus Folgendes umfasst:
eine zweite stoßableitende Schicht, welche auf die zweite behandelte Fläche geklebt ist; und
ein zweites durchsichtiges Substrat, welches mit der zweiten stoßableitenden Schicht verbunden ist,
wobei sich die zweite stoßableitende Schicht zwischen der funktionellen Schicht und dem zweiten durchsichtigen Substrat befindet.

33. Verglasungslaminat-Artikel nach den Ansprüchen 31 oder 32, wobei die erste behandelte Fläche mindestens ein Element, gewählt aus Titandioxid, Titandioxidhydrat und einem polymeren Titandioxid, umfasst.

34. Verglasungslaminat-Artikel nach den Ansprüchen 31 oder 32, wobei die funktionelle Schicht eine infrarot-reflektierende Schicht umfasst, die erste organische Titanatgrundierung ein Tetratitanat umfasst, die erste stoßableitende Schicht ein Polyvinylbutyral umfasst und das erste durchsichtige Substrat Glas umfasst.

## Revendications

1. Procédé comprenant :
l'application d'un primaire à base de titanate organique entre un film fonctionnel et une couche de dissipation des chocs ; et
le collage du film fonctionnel et de la couche de dissipation des chocs.

2. Procédé selon la revendication 1, comprenant en outre le collage d'un substrat transparent et de la couche de dissipation des chocs, la couche de dissipation des chocs se situant entre le film fonctionnel et le substrat transparent.

3. Procédé selon la revendication 1 ou 2, dans lequel la couche de dissipation des chocs comprend un poly(vinylbutyral), et le primaire à base de titanate organique comprend un chélate de titanate, un titanate de tétraalkyle, ou une combinaison de ceux-ci.

4. Procédé de fabrication d'un préstratifié de vitrage selon les revendications 1 à 3 comprenant :
(a) l'application d'un premier primaire à base de titanate organique à une première surface d'un film fonctionnel pour former une première surface traitée du film fonctionnel ; et
(b) la mise en contact, de manière à les coller, de la première surface traitée du film fonctionnel et d'une première couche de dissipation des chocs pour former un préstratifié de vitrage.

5. Procédé de fabrication d'un stratifié de vitrage comprenant :
l'application des étapes (a) et (b) de la revendication 4 ; et
le collage d'un premier substrat transparent et de la première couche de dissipation des chocs,
la première couche de dissipation des chocs se situant entre la première surface traitée du film fonctionnel et le premier substrat transparent.

6. Procédé selon la revendication 4 ou 5, dans lequel la première couche de dissipation des chocs a une température inférieure à environ 120 °F (49 °C) lors de ladite mise en contact.

7. Procédé selon la revendication 4 ou 5, dans lequel la première couche de dissipation des chocs a une température d'environ 50 °F (10 °C) à environ 100 °F (38 °C) lors de ladite mise en contact.

8. Procédé selon la revendication 1, dans lequel la première surface du film fonctionnel comprend un polyester, un polyacrylate, un ionomère, de l'acétate de cellulose ou une combinaison de ceux-ci, ou dans lequel la première surface du film fonctionnel comprend un polycarbonate, du téréphtalate de polyéthylène, de l'isophtalate de polyéthylène, du 2,6-naphtalate de polyéthylène, du téréphtalate de polybutylène, du 2,6-naphtalate de polybutylène ou une combinaison de ceux-ci.

9. Procédé selon la revendication 1, dans lequel le film fonctionnel comprend un film réfléchissant les infrarouges, un film réfléchissant les ultraviolets, un film de sécurité, un film polarisant, un film anti-intrusion, ou une combinaison de ceux-ci.

10. Procédé selon la revendication 1, dans lequel la couche de dissipation des chocs comprend un film réfléchissant les infrarouges et la couche de dissipation des chocs comprend un poly(vinylbutyral).

11. Procédé selon la revendication 1, dans lequel le premier primaire à base de titanate organique s'hydrolyse après ladite application et comprend un titanate de tétraalkyle, par exemple le titanate de tétraéthyle, le titanate de tétraisopropyle, le titanate de tétra-n-propyle, le titanate de tétra-n-butyle, un polymère de titanate de n-butyle, le titanate de tétra-2-éthylhexyle, le titanate de tétra-(octylène glycol) ou une combinaison de ceux-ci, un chélate de titanate, par exemple l'acétylacétonate de titane, l'éthylacétoacétate de titane, un polymère de tétrabutanolate de titane ou une combinaison de ceux-ci, ou une combinaison d'un titanate de tétraalkyle et d'un chélate de titanate.

12. Procédé selon la revendication 1, dans lequel le premier primaire à base de titanate organique comprend du titanate de tétraisopropyle.

13. Procédé selon la revendication 1, dans lequel le premier primaire à base de titanate organique se présente comme une solution de primaire comprenant une gamme d'environ 0,1 à environ 10 pour cent en poids de titanate organique, rapporté au poids de la solution de primaire.

14. Procédé selon la revendication 4 ou 5, dans lequel, après ladite mise en contact, le préstratifié de vitrage présente un pelage en T à 180 degrés entre le film fonctionnel et la première couche de dissipation des chocs dans la gamme d'environ 10 à environ 300 N/m.

15. Procédé selon la revendication 4 ou 5, dans lequel ladite mise en contact se fait à une vitesse dans la gamme d'environ 1 cm/s à environ 150 cm/s.

16. Procédé selon la revendication 4 ou 5, dans lequel le film fonctionnel comporte une deuxième surface à l'opposé de la première surface, ledit procédé comprenant en outre :
l'application d'un deuxième primaire à base de titanate organique à la deuxième surface du film fonctionnel pour former une deuxième surface traitée du film fonctionnel ; et
la mise en contact, de manière à les coller, de la deuxième surface traitée du film fonctionnel et d'une deuxième couche de dissipation des chocs.

17. Procédé selon la revendication 5, dans lequel ledit procédé comprend en outre l'application de chaleur, l'application de pression ou une combinaison de celles-ci à l'un au moins du film fonctionnel, de la première couche de dissipation des chocs et du premier substrat transparent de manière à former un stratifié de vitrage.

18. Procédé selon la revendication 5 ou 17, dans lequel un pelage en T à 180 degrés entre le film fonctionnel et la première couche de dissipation des chocs se situe dans la gamme d'environ 10 à environ 700 N/m.

19. Procédé selon la revendication 5, dans lequel le film fonctionnel comporte une deuxième surface à l'opposé de la première surface, ledit procédé comprenant en outre :
l'application d'un deuxième primaire à base de titanate organique à la deuxième surface du film fonctionnel pour former une deuxième surface traitée du film fonctionnel ;
la mise en contact, de manière à les coller, de la deuxième surface traitée du film fonctionnel et d'une deuxième couche de dissipation des chocs ; et
le collage de la deuxième couche de dissipation des chocs et d'un deuxième substrat transparent,
la deuxième couche de dissipation des chocs se situant entre la deuxième surface traitée du film fonctionnel et le deuxième substrat transparent.

20. Procédé selon la revendication 4 ou 5, dans lequel le premier primaire à base de titanate organique est appliqué dans une quantité se situant dans la gamme d'environ 1 µg/pouce² (0,2 µg/cm²) à environ 30 µg/pouce² (6 µg/cm²).

21. Article comprenant un film fonctionnel collé à une couche de dissipation des chocs avec une région d'adhérence entre ledit film fonctionnel et ladite couche de dissipation des chocs, ladite région d'adhérence comprenant un primaire à base de titanate organique ayant réagi.

22. Article selon la revendication 21, comprenant en outre un substrat transparent collé à ladite couche de dissipation des chocs, ladite couche de dissipation des chocs se situant entre ledit film fonctionnel et ledit substrat transparent.

23. Article selon la revendication 21 ou 22, dans lequel la couche de dissipation des chocs comprend un poly(vinylbutyral), et le primaire à base de titanate organique ayant réagi comprend au moins un élément parmi le dioxyde de titane, le dioxyde de titane hydraté et le dioxyde de titane polymérisé.

24. Article préstratifié de vitrage selon les revendications 21 à 23, comprenant :
(a) un film fonctionnel comportant une première surface traitée avec un premier primaire à base de titanate organique pour former une première surface traitée ; et
(b) une première couche de dissipation des chocs collée à ladite première surface traitée.

25. Article préstratifié de vitrage selon la revendication 24, dans lequel ledit film fonctionnel comporte une surface opposée traitée avec un deuxième primaire à base de titanate organique pour former une deuxième surface traitée, le préstratifié de vitrage comprenant en outre une deuxième couche de dissipation des chocs collée à ladite deuxième surface traitée.

26. Article préstratifié de vitrage selon la revendication 24 ou 25, dans lequel ledit film fonctionnel comprend un film réfléchissant les infrarouges, un film réfléchissant les ultraviolets, un film de sécurité, un film polarisant, un film anti-intrusion, ou une combinaison de ceux-ci.

27. Article préstratifié de vitrage selon la revendication 24 ou 25, dans lequel la première surface dudit film fonctionnel comprend un polyester, un polyacrylate, un ionomère, de l'acétate de cellulose ou une combinaison de ceux-ci.

28. Article préstratifié de vitrage selon la revendication 24 ou 25, dans lequel la couche de dissipation des chocs comprend un poly(vinylbutyral).

29. Article préstratifié de vitrage selon la revendication 24 ou 25, dans lequel ladite première surface traitée comprend au moins un élément parmi le dioxyde de titane, le dioxyde de titane hydraté et le dioxyde de titane polymérisé.

30. Article préstratifié de vitrage selon la revendication 24 ou 25, dans lequel ledit film fonctionnel comprend un film réfléchissant les infrarouges, le premier primaire à base de titanate organique comprend un titanate de tétraalkyle, et la première couche de dissipation des chocs comprend un poly(vinylbutyral).

31. Article stratifié de vitrage comprenant .
(a) un article préstratifié de vitrage selon la revendication 24 ; et
(b) un premier substrat transparent collé à ladite première couche de dissipation des chocs,
ladite première couche de dissipation des chocs se situant entre ledit film fonctionnel et ledit premier substrat transparent.

32. Article stratifié de vitrage selon la revendication 31, dans lequel ledit film fonctionnel comporte une surface opposée traitée avec un deuxième primaire à base de titanate organique pour former une deuxième surface traitée, le stratifié de vitrage comprenant en outre :
une deuxième couche de dissipation des chocs collée à ladite deuxième surface traitée ; et
un deuxième substrat transparent collé à ladite deuxième couche de dissipation des chocs,
ladite deuxième couche de dissipation des chocs se situant entre ledit film fonctionnel et ledit deuxième substrat transparent.

33. Article stratifié de vitrage selon la revendication 31 ou 32, dans lequel ladite première surface traitée comprend au moins un élément parmi le dioxyde de titane, le dioxyde de titane hydraté et le dioxyde de titane polymérisé.

34. Article stratifié de vitrage selon la revendication 31 ou 32, dans lequel ledit film fonctionnel comprend un film réfléchissant les infrarouges, le premier primaire à base de titanate organique comprend un titanate de tétraalkyle, ladite première couche de dissipation des chocs comprend un poly(vinylbutyral), et ledit premier substrat transparent comprend du verre.
